(19) Europäisches Patentamt
European Patent Office
Office européen des brevets

(11) **EP 1 864 371 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
***H02M 5/27*** *(2006.01)*

(21) Anmeldenummer: 06708716.3

(22) Anmeldetag: **10.03.2006**

(86) Internationale Anmeldenummer:
**PCT/EP2006/060617**

(87) Internationale Veröffentlichungsnummer:
**WO 2006/103155 (05.10.2006 Gazette 2006/40)**

(54) **MATRIX KONVERTER**

MATRIX CONVERTER

CONVERTISSEUR MATRICIEL

(84) Benannte Vertragsstaaten:
**CH DE FR GB IT LI SE**

(30) Priorität: **31.03.2005 CH 587052005**

(43) Veröffentlichungstag der Anmeldung:
**12.12.2007 Patentblatt 2007/50**

(73) Patentinhaber: **Alstom Technology Ltd**
**5400 Baden (CH)**

(72) Erfinder: **LACAZE, Alain**
**F-90850 Essert (FR)**

(56) Entgegenhaltungen:
**US-A1- 2004 022 081**

- **KOLAR J W ET AL: "Novel three-phase AC-DC-AC sparse matrix converter" APEC 2002. 17TH. ANNUAL IEEE APPLIED POWER ELECTRONICS CONFERENCE AND EXPOSITION. DALLAS, TX, MARCH 10 - 14, 2002, ANNUAL APPLIED POWER ELECTRONICS CONFERENCE, NEW YORK, NY : IEEE, US, Bd. VOL. 2 OF 2. CONF. 17, 10. März 2002 (2002-03-10), Seiten 777-787, XP010583007 ISBN: 0-7803-7404-5**
- **LIXIANG WEI ET AL: "Matrix converter topologies with reduced number of switches" 33RD.ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23 - 27, 2002, ANNUAL POWER ELECTRONICS SPECIALISTS CONFERENCE, NEW YORK, NY : IEEE, US, Bd. VOL. 2 OF 4. CONF. 33, 23. Juni 2002 (2002-06-23), Seiten 57-63, XP010596065 ISBN: 0-7803-7262-X**

**Beschreibung**

TECHNISCHES GEBIET

Die vorliegende Erfindung bezieht sich auf das Gebiet der Ausrüstung für Generatoren mit hoher Phasenordnung unter Verwendung von Leistungselektronik. Die vorliegende Erfindung bezieht sich insbesondere auf einen Matrix-Konverter zur Umwandlung von elektrischer Energie, welcher typischerweise mit einem Generator verbunden ist für die Konversion von erzeugtem Mehrphasenwechselstrom des Generators in einen Mehrphasenwechselstrom, welcher an das Netz angepasst ist.

HINTERGRUND DER ERFINDUNG

Bei der Energieerzeugung ist bei einer vorgegebenen Ausgangsleistung eine Zunahme der Umdrehungsgeschwindigkeit der Turbine verbunden mit einer Abnahme der Grösse und der Kosten. Zudem kann die Effizienz verbessert werden. Bisher sind Energieerzeugungsturbinen bis 70 MW mit Generatoren über Getriebeanordnungen verbunden, um den Betrieb bei höheren Turbinenumdrehungsgeschwindigkeiten zu ermöglichen. Wenn die Ausgangsleistung zunimmt, wird aber die Verwendung von Getriebeanordnungen infolge Problemen mit der Zuverlässigkeit zunehmend schwierig. In solchen Fällen wird die Turbine bei synchroner Geschwindigkeit betrieben.

Die Verwendung von statischen Frequenzkonvertern (Leistungselektronik) stellt eine Alternative mit vielen Vorteilen, wie reduzierte Kosten des Generators in Übereinstimmung mit einem konstanten Produkt von Volumen und Umdrehungsgeschwindigkeit, standardisierte Generatoren für sowohl 50 und 60 Hz, anpassbare Geschwindigkeit, was die Einstellung der Teillasteffizienz der Turbine erlaubt, wesentliche Reduktion im Lärm, saubere (ölfreie) Kühlung, etc., zur Verfügung

Sowohl im Fall von Energieerzeugung als auch im Falle von Antrieben würde eine Reduktion der Verluste statischer Frequenzkonverter wesentliche Kosteneinsparungen bringen. Eine Reduktion der Verluste würde vor allem einen Einfluss auf die Investitionskosten haben, weil die Kühlung für einen wesentlichen Teil der Gesamtkosten eines Konverters verantwortlich ist.

Statische Frequenzkonverter existieren sowohl mit indirekter AC/DC/AC Konversion als auch mit direkter AC/AC Konversion.

Die indirekte Konversion (AC/DC/AC) wird durch Erzeugung eines Gleichstroms oder einer gerichteten Gleichspannung aus der Dreiphasenquelle (Netz im Falle eines Motors; Generator im Falle von Energieerzeugung) bewirkt. Anschliessend wird der Gleichstrom oder die Gleichspannung unter Verwendung eines Wechselrichters in einen Wechselstrom zurückkonvertiert. Eine Induktivität (Stromzwischenkreis-Umrichter, current source converter) oder eine Anordnung von Kapazitäten (Spannungszwischenkreis-Umrichter, voltage source converter) werden in den Zwischenkreis geschaltet, um eine Reduktion der Welligkeitskomponenten oder der Überschwingungsspitzen des Stromes zu bewirken.

Die heute eingesetzten direkten und indirekten Stromkonverter verwenden Thyristoren. Wenn natürliche Kommmutierung der Thyristoren möglich ist können die Verluste im Konverter reduziert werden. Spannungszwischenkreiskonverter verwenden GTO's mit deren hohen inhärenten Schaltverlusten, sowie IGBT's oder IGCT's. Die Leistungsaufnahmemöglichkeit der individuellen Komponenten ist niedriger als jene von Thyristoren, und entsprechend ist eine grössere Anzahl von Komponenten für eine spezifizierte Spannung und einen spezifizierten Strom erforderlich. Spannungszwischenkreiskonverter können von der Verwendung von Pulsweiten-Modulationstechniken profitieren, welche die Form der Stromkurven verbessern und die Harmonischen reduzieren. Je höher die Schaltfrequenzen sind, desto besser ist es, ausser hinsichtlich Verlusten und der dielektrischen Ermüdung. Der Strom kann im Wesentlichen sinusförmig produziert werden, sodass eine Unterlastung der Energieerzeugung der elektrischen Maschine vermieden wird.

Direkte Wandlung (AC/AC) ist beispielsweise unter Verwendung eines sogenannten Zyklokonverters möglich. Die direkte Konversion weist aus Sicht der elektrischen Maschine wesentliche Vorteile auf, weil der Strom eher sinusförmig als ein zerstückelter Gleichstrom ist. Dies reduziert die Verluste, welche zusätzlich in der elektrischen Maschine auftreten, und verhindert ausserdem pulsierende Torsionen.

Die Verwendung eines Dreiphasenzyklokonverters limitiert aber den erreichbaren Frequenzbereich auf 0 - 1/3 der Eingangsfrequenz. Ein Dreiphasenzyklokonverter ist aus drei Einzelphasenzyklokonvertem aufgebaut, wobei bei ausgewogener Betriebsweise jeder 1/3 der Leistung verarbeitet. Eine Überschreitung der 1/3 Grenze im Frequenzverhältnis hat eine stark unausgeglichene Betriebsweise zur Folge. In diesem Fall sollte jeder Einzelphasenzyklokonverter für mehr als 1/3 der vollen Leistung ausgelegt werden. Die Überdimensionierung kann bis zu einem Faktor 3 in der Leistungsauslegung betragen.

Eine andere Möglichkeit der direkten Wandlung wird durch einen sogenannten Matrix-Konverter zur Verfügung gestellt, bei welchem jede Phase einer Mehrphasenquelle (Generator oder Netz) mit jeder Phase einer Mehrphasenlast (Netz, passive Last, Motor, etc.) über einen bidirektionalen Schalter verbunden ist oder verbindbar ist. Die Schalter bestehen aus einer entsprechenden Anzahl von Thyristoren, um den differenziellen Spannungen zwischen den Phasen und den Phasenströmen standzuhalten, und um eine Stromumkehr zu ermöglichen. Sie können als wahrhaft bidirektionale Komponenten betrachtet werden, mit der Option, gleichzeitig zusätzliche Verkabelungen zu verwenden wie Beschaltungs-Elemente (Snubbers) oder Stromversorgungen für die Treiberpulse der antiparallelen Komponenten.

Die Schalter sind in einer (m x n)- Matrix bei m Phasen der Quelle und n Phasen der Last angeordnet. Dies stellt die Option zur Verfügung, jede gewünschte Verbindung zwischen den Eingangsphasen und den Ausgangsphasen herzustellen. Dennoch hat dies gleichzeitig den Nachteil, dass gewisse Schaltzustände der Matrix nicht erlaubt werden dürfen, da andernfalls beispielsweise ein Kurzschluss resultieren könnte. Weiterhin ist es erwünscht, die Kommutierung von einer Phase zu einer anderen Phase derart durchzuführen, dass die niedrigst möglichen Schaltverluste resultieren.

Die US A 5,594,636 beschreibt einen Matrixkonverter und ein Verfahren zu seinem Betrieb, in welchem die Kommutierung zwischen den Phasen teilweise als natürliche Kommutierung durchgeführt wird, mit einer erzwungenen Kommutierung dort, wo natürliche Kommutierung nicht möglich ist. Obwohl mit diesem Typ der Auswahl Schaltverluste in Folge der natürlichen Kommutierung reduziert werden, verbleiben dennoch jene Schaltverluste, welche aufgrund der erzwungenen Kommutierung zu Stande kommen. Weiterhin macht die mögliche erzwungene Kommutierung an allen Positionen der Matrix die Verwendung von Komponenten erforderlich, welche ausgeschaltet werden können. Dies erhöht den Schaltaufwand erheblich.

Dennoch ist es möglich, einen Matrixkonverter so zu betreiben, dass nur natürliche Kommutierungen auftreten. Dies kann erreicht werden, indem ein Umschalten von einer ausgewählten verbundenen Phase des Generators auf eine ausgewählte nicht verbundene Phase des Generators nur erlaubt wird, wenn bestimmte Bedingungen erfüllt sind. Ein solcher Matrixkonverter sowie eine Betriebsweise für einen solchen Matrixkonverter ist in der DE-A-10051222 sowie in der korrespondierenden Europäischen Anmeldung EP-A-1199794 offenbart. Während ein solches Konzept eines Matrixkonverters sowie seiner Betriebsweise von hoher Effizienz und Vielseitigkeit ist, so gibt es dennoch Nachteile für gewisse Anwendungen in Bezug auf harmonische Verzerrung und in Bezug auf mögliche Frequenzverhältnisse.

In "Novel 3-Phase AC-DC-AC Sparse Matrix Converter", von J.W. Kolar, 2002 IEEE und "Matrix Converter Topologies with reduced number of switches"" von Lixiang Wei, 2002 IEEE, sind weitere relevante Matrixkonverter offenbart.

ZUSAMMENFASSUNG DER ERFINDUNG

Die der vorliegenden Erfindung zu Grunde liegende objektive Aufgabe besteht darin, einen verbesserten Matrix-Konverter für die Konversion eines Mehrphasen-wechselstroms / Wechselspannung, beispielsweise zur Verfügung gestellt durch einen Generator, in einen gewünschten Ausgangswechselstrom / Wechselspannung zur Verfügung zu stellen. Dies im Gebiet eines Matrixkonverters, welcher einen Mehrphasenwechselstrom in einen gewünschten Ausgangswechselstrom konvertiert, wobei m Phasen des Mehrphasenwechselstroms mittels einer Vielzahl von steuerbaren bidirektionalen Schaltern in Ausgangswechselstrom mit n (n < m) Phasen der Last konvertiert werden.

Die vorliegende Erfindung löst die obige Aufgabe, indem ein Matrix-Konverter nach Anspruch 1 zur Verfügung gestellt wird, welcher wenigstens zwei Stufen aufweist, wobei vorzugsweise in wenigstens einer Stufe des Konverters jede Phase des Mehrphasenwechselstroms durch einen steuerbaren bidirektionalen Schalter gesteuert wird.

Typischerweise ist diese Stufe die erste Stufe des Konverters und ist direkt mit einem Generator verbunden. Aufgrund dieser ersten Stufe des Konverters kann die Anzahl von erforderlichen bidirektionalen Schaltern wesentlich reduziert werden.

In einem Matrix-Konverter nach dem Stand der Technik wie beispielsweise in der EP-A-1199794 beschrieben, ist die Anzahl von bidirektionalen Schaltern m x n. Infolge der Tatsache, dass ein solcher Matrix-Konverter normalerweise in der Lage sein muss, hohe Leistungen auszuhalten (typischerweise sind Netzwerke im Bereich von 5 - 15 kV) umfasst zusätzlich jeder der bidirektionalen Schalter mehrere Schaltelemente in Reihe. Insbesondere in Kombination mit Generatoren von hoher Phasenordnung führt dies zu einer exzessiven Anzahl von erforderlichen Schaltelementen, was die mit einem Matrix-Konverter verbundenen Kosten erhöht.

Der vorgeschlagene Mehrstufen-Matrix-Konverter vereinfacht das Design und reduziert die Anzahl der erforderlichen Schaltelemente, indem die Stapel von Schaltelementen (beispielsweise Thyristoren, aber auch entsprechend angeordnete IGBT's, IGCT's oder GTO's sind möglich) aufgeteilt werden und ein Teil davon in der ersten Stufe des Konverters kombiniert wird. Diese erste Stufe erfordert dann nicht die zur Bereitstellung eines vollen Satzes von Schaltelementen in Reihe in jedem der m x n Pfade zwischen Eingang und Ausgang, sondern es genügt, einen Teil der Schaltelemente in jedem der Mehrphasenwechselstrompfade zur Verfügung zu stellen, welcher als Eingang für diese erste Stufe dient.

Die mögliche Reduktion der Anzahl von Elementen ist beispielsweise wie folgt gegeben: Wenn die Anzahl von Schaltelementen in Reihe in zwei aufgeteilt wird, verglichen mit einer Architektur des Standes der Technik, und wenn k Schaltelemente in Reihe in jedem bidirektionalen Schalter angeordnet sind, um der Spannung widerstehen zu können, werden nur k/2 x m x n Schaltelemente in der zweiten Stufe verbleiben, während die erste Stufe k/2 x m Schaltelemente umfasst. Dies führt zu einer Gesamtzahl von k/2 x m x (n+1), während entsprechend dem Stand der Technik k x m x n Schaltelemente notwendig sind. Die Einsparungen hinsichtlich Kosten sowie auch hinsichtlich der erforderlichen Kontrollausrüstung wie Snubbers und ähnliches sowie hinsichtlich Redundanz sind entsprechend erheblich und die Vereinfachung führt zudem zu einem vereinfachten Kontrollschema für die Schaltung des Matrix-Konverters.

In Bezug auf die Auslegung der Schaltelemente muss beachtet werden, dass die maximale Spannung zwischen den Phasen durch einen bidirektionalen Schalter in der zweiten Stufe ausgehalten werden muss.

Aber nicht nur auf der Eingangsseite des Matrixkonverters sind Vereinfachungen möglich, sondern auch innerhalb der zweiten Stufe ist eine erhebliche Reduktion der Elemente möglich, was zu ähnlichen Vorteilen führt, wie sie oben angegeben sind. Entsprechend einer bevorzugten Ausführungsform ist es beispielsweise möglich, Gruppen von Schaltelementen innerhalb der zweiten Stufe derart zu kombinieren, dass diese auf die Anzahl der Ausgangphasen angepasst sind.

Wenn beispielsweise m ein ganzzahliges Vielfaches von n ist, so ist es möglich, in wenigstens einer Stufe, typischerweise in der zweiten Stufe des Konverters, m/n Gruppen von steuerbaren bidirektionalen Schaltern vorzusehen, wobei jede Gruppe n parallele bidirektionale Schalter aufweist, welche individuell mit jeder der Phasen des Ausgangswechselstroms verbunden sind. Diese zweite Stufe ist bevorzugt die letzte Stufe des Konverters und ist direkt mit einem Transformator oder einer Last verbunden.

Es muss darauf hingewiesen werden, dass das Design dieser zweiten Stufe nicht notwendigerweise vom Design der ersten Stufe, wie oben erläutert, abhängt. Tatsächlich ist es nämlich so, dass diese zweite Stufe für sich allein ein erfinderisches Konzept ist, unabhängig von der obengenannten ersten Stufe.

Entsprechend einer Ausführungsform der vorliegenden Erfindung ist der Matrix-Konverter entsprechend dadurch gekennzeichnet, dass m ein ganzzahliges Vielfaches von n ist, und dass der Konverter zwei Stufen umfasst. Die Stufe des Konverters, in welcher jede Phase des Mehrphasenwechselstroms durch einen steuerbaren bidirektionalen Schalter gesteuert wird, ist die erste Stufe, und ist direkt mit einem Generator verbunden. Die zweite Stufe des Konverters umfasst m/n Gruppen von steuerbaren bidirektionalen Schaltern, wobei jede Gruppe n parallele bidirektionale Schalter aufweist, welche individuell mit jeder der Phasen des Ausgangswechselstroms verbunden sind. Diese zweite Stufe ist direkt mit einem Transformator oder einer Last verbunden. Vorzugsweise bilden von der Generatorseite m Phasen den Eingang der ersten Stufe, und m/n Phasen bilden den Ausgang dieser ersten Stufe. Die zwei Stufen sind vorzugsweise derart verbunden, dass Gruppen von n Ausgangsphasen (vorzugsweise benachbarte Phasen, wenn man die relative umlaufsmässige Anordnung von Statorschlitzen des Generators betrachtet) der ersten Stufe verbunden oder zusammengenommen sind. Andererseits ist jeder der so gebildeten m/n Leiter mit jedem der bidirektionalen Schalter einer entsprechenden Gruppe der zweiten Stufe des Konverters verbunden. In einem solchen Aufbau enthält die zweite Stufe nur k/2 x m/n x n = k/2 x m bidirektionale Schalter und nicht, wie im oben angegebenen Fall, k/2 x m x n. Die Reduktion in der Anzahl von Schaltelementen ist daher bei dieser Architektur noch wesentlicher.

Die gesamte Anzahl von bidirektionalen Schaltern ist dann k x m anstelle von k x m x n (ursprünglich) oder k x m x (n+1)/2 (wenn nur die erste Stufe modifiziert wird).

Ganz generell ausgedrückt gilt folgendes: Ein Stapel von k Schaltelementen kann in zwei Stapel mit $k_1$ und $k_2$ Elementen ($k_1 + k_2 = k$) aufgeteilt werden. Die erste Stufe des Konverters wird von p Gruppen von q Phasen (p x q = m) gebildet. Jede der p Gruppen wird aus einem Stapel von $k_1$ Schaltelementen gebildet, welche q Phasen mit einer der Schaltgruppen der zweiten Stufe verbinden. Die Anzahl von Schaltelementen in der ersten Stufe ist $k_1$ x p x q (anstelle von $k_1$ x p x q x n).

Die zweite Stufe des Konverters wird dann aus q Gruppen mit n Schalterstapeln gebildet, wobei jeder Stapel $k_2$ Schaltelemente in Reihe aufweist. Jeder Stapel verbindet eine der p Gruppen der ersten Stufe mit einer der n Phasen der Last.

Die Anzahl der Schaltelemente der zweiten Stufe ist $k_2$ x p x n (anstelle von $k_2$ x p x q x n).

Die Gesamtzahl der Schaltelemente ist daher p x (q x $k_1$ + n x $k_2$) anstelle von p x q x ($k_1$ + $k_2$) x n. In der ersten Stufe ist der Reduktionsfaktor n (Anzahl von Phasen der Last) und in der zweiten Stufe ein Faktor q.

Diese wesentliche Einsparung könnte durch Betrachtungen des Arbeitszyklus (duty cycle) limitiert werden.

Generell kann gesagt werden, dass in jedem Fall m > 2 und n > 1 ist, vorzugsweise m > 3 und n > 2. Im letzteren Fall sollte die Zahl der Gruppen in der zweiten Stufe wenigstens n + 1 (äquivalent zu 90°) sein, um in der Lage zu sein, den Matrix-Konverter effizient zu betreiben. Vorzugsweise sollte die Anzahl der Gruppen in der zweiten Stufe wenigstens 6 sein (äquivalent zu einer relativen Phasenverschiebung von 60°).

Entsprechend einer anderen Ausführungsform der vorliegenden Erfindung wird diese Architektur auf das Gebiet von Generatoren mit hoher Phasenordnung angewendet. Daher hat der Mehrphasenwechselstrom bevorzugt sieben oder mehr Phasen.

Die Verwendung eines sogenannten Generators mit hoher Phasenordnung und der entsprechend hohen Zahl von Phasen des Mehrphasen-Wechselstroms, führt zu einer Reduktion der harmonischen Verzerrungen. Die Hauptargumente, welche in Betracht gezogen werden sollten, um die Anzahl der Phasen des Mehrphasen-Wechselstroms zu optimieren, sind:

- Die Zahl der Phasen sollte vorzugsweise ein Vielfaches von 3 sein, andernfalls sind die Ströme und Spannungen permanent unbalanciert.

- Eine grosse Anzahl von Phasen des Mehrphasen-Wechselstroms führt zu einer hohen Kommutierungs-Frequenz.

- Eine hohe Kommutierungs-Frequenz reduziert die harmonische Verzerrung.

- Die Kommutierungs-Frequenz ist aufgrund der Dauer der Kommutierungen beschränkt.

- Die Gesamtzahl der Schalter ist proportional zur Anzahl der Phasen. Die Kosten des Konverters hängen direkt davon ab.

- Eine grosse Anzahl von Phasen bedeutet einen niedrigen Arbeitszyklus (duty cycle) in der m Phasenquelle. Die Auslastung des Generators ist dann schlecht und seine Kosten sind hoch.

Zusätzlich erweist es sich als vorteilhaft, einen Generator zu verwenden, dessen Statorwicklungen, welche die Phasen des Mehrphasen-Wechselstroms zur Verfügung stellen, deltaverbunden sind. Es ist beispielsweise möglich, einen polygonalen Stator zu verwenden, wie er erhalten wird, indem die externen Wicklungs-Verbindungen verbunden werden, und indem die Eingänge des Matrix-Konverters mit den Spitzen der Evolventen (Volutes) verbunden werden. In diesen polygonalen Statorwicklungen sind die individuellen Wicklungen in angepasster Weise in Reihe verbunden, wobei die Verbindungspunkte m Scheitelpunkte bilden, und jeder Scheitelpunkt eine Phase definiert, welche dann mit dem Eingang der ersten Stufe des Matrix-Konverters verbunden ist. Somit können Standard-Generatoren modifiziert werden, um entsprechend betrieben zu werden. Das kann erreicht werden, indem - vorausgesetzt der Wicklungsschritt kann angepasst werden - beispielsweise die externen Wicklungsverbindungen verbunden werden, um einen polygonalen Stator zu erhalten, und indem die Eingänge der ersten Stufe des Matrix-Konverters mit den Spitzen der Evolventen verbunden werden. Die umlaufenden Ringe, welche die Spulen mit den Klemmen verbinden, werden entsprechend entfernt, und die Enden der Stäbe, welche mit den umlaufenden Ringen verbunden waren, werden zusammengeschweisst. Die Statorwicklung wird entsprechend voll symmetrisch und bildet eine einzige kurzgeschlossene Spule.

Eine sehr kompakte und effiziente Architektur ist möglich, wenn insbesondere die erste Stufe des Konverters in den Generator-Stator integriert wird. Um zudem die thermischen Bedingungen innerhalb des Generators zu verbessern, ist es möglich, den im Stator angeordneten Teil des Matrix-Konverters in der Strömung Strom des zur Kühlung des Generators verwendeten Kühlfluids anzuordnen.

Die vorliegende Erfindung ist nicht beschränkt auf spezifische Zahlen von gewünschten Ausgangs-Wechselströmen. Aber typischerweise wird der gewünschte Ausgangs-Wechselstrom 3 oder 6 Phasen aufweisen. Zudem ist die vorliegende Erfindung nicht besonders eingeschränkt auf Generatoren mit hoher Phasenordnung. Typischerweise wird der Mehrphasen-Wechselstrom aber mehr als 8 Phasen aufweisen, und vorzugsweise wird die Zahl der Phasen des Mehrphasen-Wechselstroms ein Vielfaches von 3 sein. Der Mehrphasen-Wechselstrom hat vorzugsweise 9, 12, 15, 18, 21 oder 24 oder mehr Phasen. Aus praktischen Gründen ist die Anzahl der Phasen des Mehrphasen-Wechselstroms vorteilhaft gleich der Anzahl von Statorschlitzen.

Zur korrekten Steuerung des Matrix-Konverters sind die bidirektionalen Schalter normalerweise über eine Kontrolleinheit gesteuert, welche in ausgewählter Weise m Eingänge mit n Ausgängen verbindet, wobei erste Mittel zur Bestimmung des Vorzeichens der Ströme in den Eingängen und zweite Mittel zur Bestimmung der Vorzeichen der Spannungen zwischen den Eingängen vorgesehen sind, und wobei die ersten und zweiten Mittel in aktiver Verbindung mit dem Kontrollsystem stehen. Die bidirektionalen Schalter sind dabei mit dem Kontrollsystem über eine Steuerleitung verbunden, mittels welcher dem Steuersystem die Informationen betreffend den Schaltzustand der Schalter übermittelt werden.

Jedes Verfahren zum Betrieb eines Matrix-Konverters produziert inhärent Anforderungen, ausgewählte Eingangsphasen mit ausgewählten Ausgangs-Phasen zu verbinden.

Die zweite Stufe des vorgeschlagenen Konverters kann mit einer Sequenz von Kommutierungen, wie sie für einen Matrix-Konverter mit einer einzigen Stufe definiert und bekannt ist, betrieben werden. Der einzige Punkt besteht darin, zu überprüfen, ob Kommutierungen innerhalb der Gruppe der ersten Stufe oder von einer Gruppe auf eine andere erforderlich sind. Im ersten Fall muss in der zweiten Stufe keine Kommutierung ausgelöst werden, während im zweiten Fall die Kommutierungsanforderung erfolgen muss.

Die erste Stufe erhält nur die Information betreffend die zu verbindenden Generatorphasen und die Leitungsrichtung.

Weitere Ausführungsformen der vorliegenden Erfindung sind in den abhängigen Ansprüchen beschrieben.

KURZE BESCHREIBUNG DER FIGUREN

In den beigefügten Zeichnungen sind bevorzugte Ausführungsformen der Erfindung dargestellt, wobei:

Figur 1     eine schematische Darstellung eines aktiven Generator-Matrix-Konverters nach dem Stand der Technik ist;

Figur 2     a) eine schematische Darstellung eines aktiven Generator-Matrix-Konverters mit hoher Phasenordnung ist; b) eine schematische Darstellung einer Gruppe von drei bidirektionalen Schaltern ist;

Figur 3     eine schematische Darstellung eines aktiven zweistufigen Generator-Matrix-Konverters mit hoher Phasenordnung ist; und

Figur 4    eine schematische Darstellung eines anderen zweistufigen Generator-Matrix-Konverters mit hoher Phasenordnung ist.

DETAILLIERTE BESCHREIBUNG DER ERFINDUNG

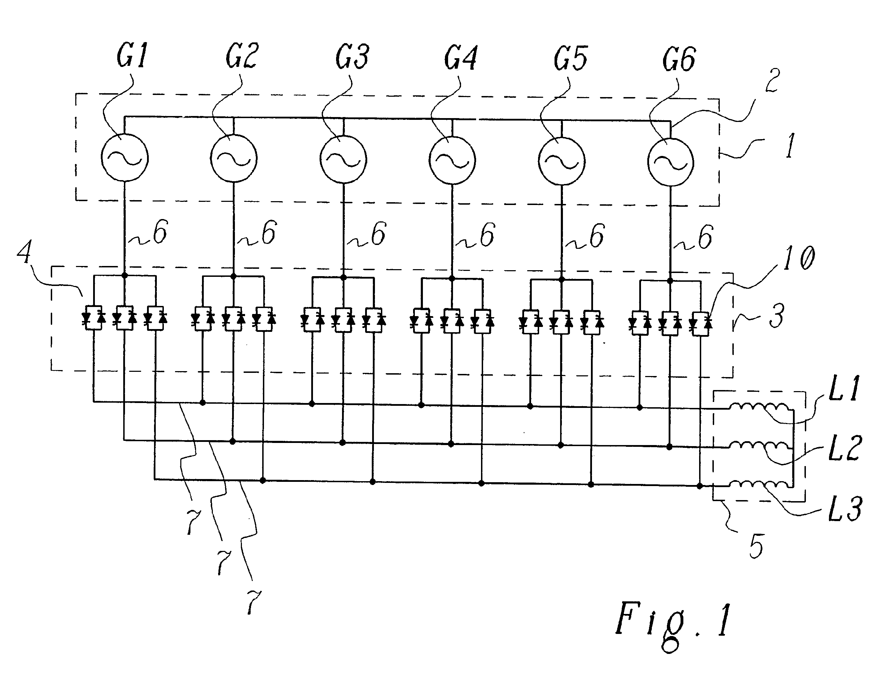

Mit Bezug auf die Zeichnungen, welche zur Illustration der vorliegenden Ausführungsbeispiele der Erfindung dienen sollen, und nicht, um diese einzuschränken, zeigt Figur 1 einen Generator-Aufbau, in welchem ein Generator 1 mit sechs sternverbundenen (Bezugszeichen 2) Generator-Phasen G1 bis G6 mit einem Matrix-Konverter 3 verbunden ist. Ein Mehrphasen-Wechselstrom 6, welcher sechs Phasen (m = 6) umfasst, bildet entsprechend den Eingang des Matrix-Konverters 3. Jede dieser Phasen ist individuell über einen bidirektionalen Schalter 4 mit jedem der drei Ausgangswechselstrom-Phasen 7 verbunden. Diese Anordnung der bidirektionalen Schalter 4 führt zu einer 6 x 3 Matrix von Schaltern, oder allgemeiner ausgedrückt, für m Phasen des Mehrphasen-Wechselstroms 6 und n Phasen des Ausgangs-Wechselstroms 7 umfasst der Matrix-Konverter eine m x n Matrix von bidirektionalen Schaltern 4. Bei Verwendung einer entsprechenden Steuerung ist es somit möglich, in Abhängigkeit des gewünschten Ausgangs-Musters für den Ausgangs-Wechselstrom 7, zu jedem Zeitpunkt jede Eingangs-Phase mit jeder Ausgangs-Phase zu verbinden. Der Ausgangs-Wechselstrom 7 ist wie üblich über einen Transformator 5 an ein Netz (Phasen L1,...,L3) angebunden.

Ein Matrix-Konverter nach Fig. 1 und eine bevorzugte Betriebsweise eines solchen Matrix-Konverters ist in der DE-A-10051222 sowie in der korrespondierenden europäischen Anmeldung EP-A- 1199794 beschrieben.

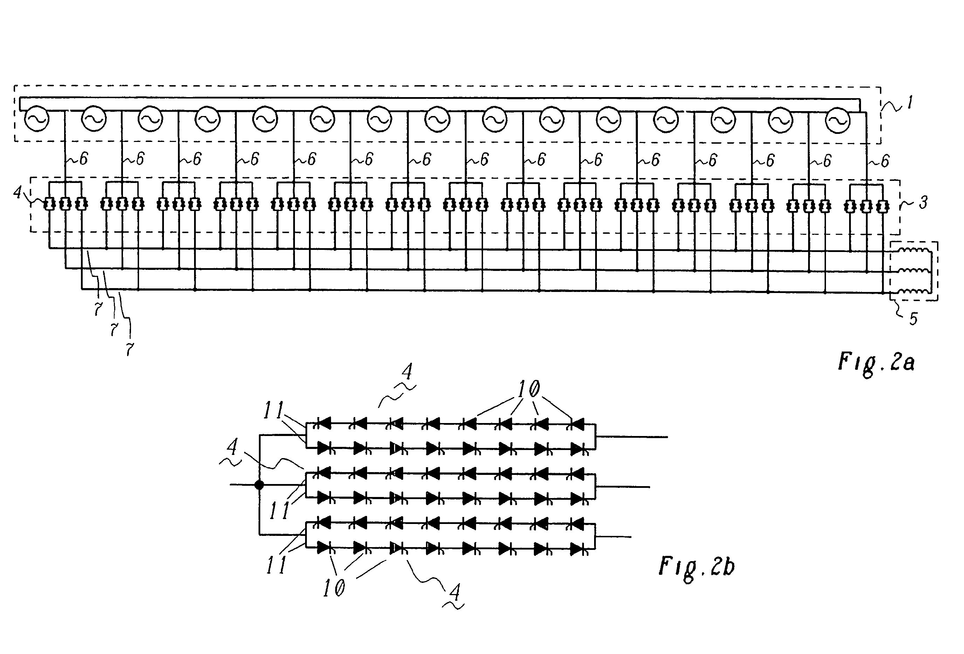

In mancherlei Hinsicht, wie beispielsweise harmonische Verzerrung oder Frequenz-Verhältnis, wäre es bevorzugt, viele Phasen zu verwenden, viel mehr als die 6, wie sie in Fig. 1 dargestellt sind. Eine hohe Anzahl von Phasen könnte aber in einer schlechten Nutzung sowohl der Stator-Wicklung als auch der LeistungsSchalter resultieren. Weiterhin impliziert ein Design nach Fig. 2 die Verwendung einer grossen Zahl von Schaltelementen, was zu hohen Investitionskosten führt, welche auf der einen Seite mit den Schaltelementen zusammenhängen, aber auch mit der grossen Anzahl der notwendigen Mittel zur Steuerung dieser Schaltelemente.

Es gibt einen Ausweg für die Nutzung des Generator-Stators, welche darin besteht, einen polygonalen Stator in Betracht zu ziehen. Eine polygonale Wicklung kann einfach erhalten werden, indem die äusseren Wicklungs-Verbindungen verbunden werden. Dann können die Schalter einfach mit den Spitzen der Evolventen verbunden werden. Im Prinzip kann die Anzahl der Phasen so hoch sein wie die Anzahl der Statorschlitze (d.h. mehrere zehn).

Der Ausgang kann entweder 3 oder 6 Phase aufweisen. Wenn eine 3-Phasenverbindung verwendet wird, dann kann der Wicklungsschritt nicht wie normalerweise reduziert werden, was der Spannung unter lastfreien Bedingungen Verzerrungen auferlegen könnte, und zu einer Reduktion der effektiven Spannung führt (der Wicklungs-Koeffizient wird reduziert). Die spezifische Ausgangsleistung wird leicht reduziert, und der Generator sollte etwas überausgelegt werden (ca. 15%). Wenn ein 6-Phasen-Ausgang verwendet wird, dann ist die Ausgangs-Leistung exakt gleich wie mit der Original-Wicklung. Der Nachteil ist nun bei den Sammelschienen und beim Aufwärts-Transformator. Ein spezielles Design der Sammelschienen erlaubt eine wesentliche Reduktion der zusätzlichen Kosten. Die zusätzlichen Kosten beim Aufwärts-Transformator für eine doppelte Wicklung sind marginal. Ein 6-Phasen-Ausgang ist sehr attraktiv, wenn der Phasenstrom gross ist und die Auslegung der Thyristoren überschreitet.

Fig. 2a zeigt entsprechend einen möglichen Aufbau mit einem Generator 1 hoher Phasenordnung, mit 15 Phasen. Die hier beschriebene Architektur zielt darauf ab, eine attraktive Lösung zur Verfügung zu stellen, wenn die Phasenzahl gross wird, beispielsweise 24, 36 oder mehr. Tatsächlich kann die Lösung auf jede Anzahl von Phasen angewendet werden. Die Architektur wird für den Fall eines m Phasen-Generators erklärt, welcher über den Matrix-Konverter mit einem 3-Phasen-Netzwerk verbunden ist. Tatsächlich werden auch andere Konfigurationen in Betracht gezogen, beispielsweise ein 3-Phasen-Netzwerk, welches einem m Phasen-Motor speist, oder ein Transformator mit doppelter Wicklung (6-Phasen), welcher einen m Phasen-Motor speist.

Die angegebene Generator-Konfiguration für 15 Phasen des Mehrphasen-Wechselstroms 6 und für 3 Phasen des gewünschten Ausgangs-Wechselstroms 7 ist einem Standard Synchron-AC-Generator des Standes der Technik sehr ähnlich. Der Unterschied liegt in den Endwicklungs-Verbindungen der Statorstäbe, welche modifiziert werden müssen.

Zuerst werden die umlaufenden Ringe, welche die Spulen mit den Anschlussklemmen verbinden, entfernt. Die Enden der Stäbe, welche mit den umlaufenden Ringen verbunden waren, werden nun zusammengeschweisst, so wie jeder Stab, welcher die Spulen bildet. Dadurch wird die Statorwicklung vollständig symmetrisch und bildet eine einzige kurzgeschlossene Spule. Zum Zweiten werden einige oder möglicherweise sogar alle zusammengeschweissten Verbindungen mit einem bidirektionalen Schalter 4 verbunden. Die resultierende scheinbare Phasenzahl m des Mehrphasen-Wechselstroms könnte 3, 4, 5, 6... bis zur Anzahl der Stäbe betragen, d.h. zweimal die Anzahl der Schlitze, wenn sowohl das angetriebene als auch das nicht angetriebene Ende mit Schaltern ausgestattet werden. Normalerweise sind AC-Generatoren sternverbunden, in diesem Fall ist der Generator deltaverbunden. Die Stator-Konfiguration hat einige Ähnlichkeit mit der Rotorwicklung eines DC-Motors.

Das grundlegende Betriebsprinzip in einem solchen Aufbau bleibt gleich und wird für eine grosse Anzahl von Phasen angewendet.

Infolge der grossen Anzahl von Phasen wird die scheinbare Kommutierungs-Frequenz hoch sein. Die erzeugten Harmonischen auf der Spannung werden bei höherer Frequenz auftreten und eine niedrigere Amplitude aufweisen. Der entsprechende harmonische Strom wird infolge der Phasen-Induktivität des Generators weiter reduziert.

Wenn aber ein solcher Generator mit hoher Phasenordnung mit einer Last verbunden werden soll, führt die Verwendung eines Matrix-Konverters zu einer exzessiven Anzahl von erforderlichen Schaltelementen. Die Kosten sowie auch die Grösse nehmen mit der Anzahl der Phasen dramatisch zu. Tatsächlich ist jedes der bidirektionalen Schaltelemente, wie in Fig. 2b) dargestellt, typischerweise aus einem Stapel von individuellen Thyristoren aufgebaut. Beispielsweise braucht man für ein 11 kV Netzwerk 8 Thyristoren 10 in Reihe in jedem Zweig 11 jedes bidirektionalen Schalters 4. Im Falle eines 15-Phasen-Eingangs und eines 3-Phasen-Ausgangs führt dies zu 720 (8 x 2 x m x n) Thyristoren (oder äquivalenten steuerbaren Schaltelementen), welche erforderlich sind, um einen solchen Matrix-Konverter zu realisieren.

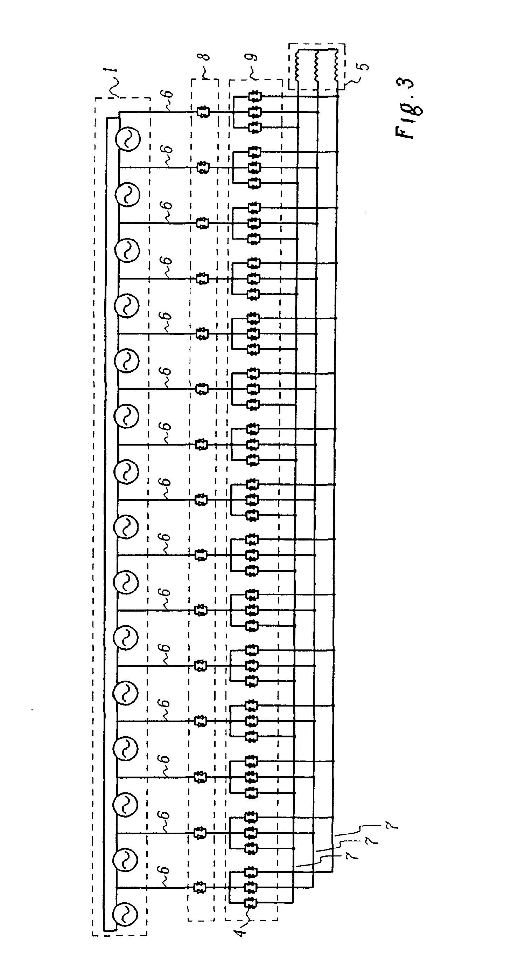

Entsprechend der vorliegenden Erfindung ist es nun möglich, diese Thyristoren-Stapel in zwei Teile aufzuspalten, wie dies in Fig. 3 dargestellt ist. Entsprechend wird eine erste Stufe 8 des Konverters 3 erzeugt, in welcher jede der Eingangs-Phasen 6 mit einem individuellen bidirektionalen Schaltelement 4 versehen wird. Der Vorteil dieses Designs ist, dass die Zahl von Thyristoren beispielsweise 30% niedriger ist, als dies normalerweise bei einem Wechsel von 6 zu 15 Phasen resultieren würde, d.h. die Zunahme ist nur 70% anstelle von 150%. Dies gilt, wenn der Stapel von Thyristoren in zwei aufgeteilt wird, und eine Hälfte in der m x n Matrix mit dem Bezugszeichen 3 angegeben verbleibt, und die andere Hälfte (d.h. 4 Thyristoren in Reihe für jeden Zweig jedes bidirektionalen Schalters) in die zweite Stufe 9 des Konverters gelegt wird. Die Einsparung ist offensichtlich sogar für einen sechs Phasen-Ausgang grösser.

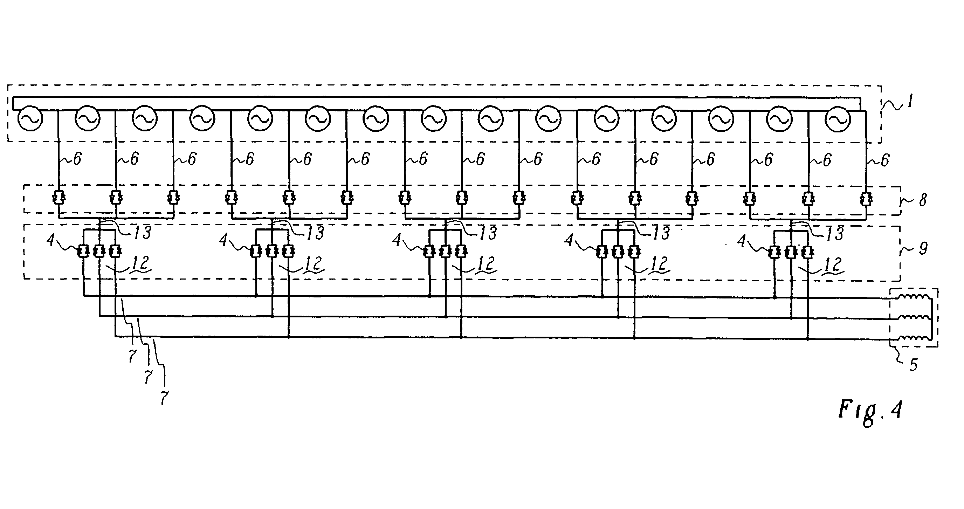

Dies ist aber nicht die einzige Reduktion, welche in einem solchen Aufbau möglich ist. Zudem können auch die Ausgangs-Schalter geteilt werden, was zu einer Architektur führt, wie sie in Fig. 4 angegeben ist. Die Ausgangs-Schalter, welche zur zweiten Stufe 9 des Matrix-Konverters gehören, werden in m/n Gruppen 12 (im spezifischen Beispiel wie in Fig. 4 angegeben führt dies zu 5 Gruppen 12) gruppiert, wobei jede dieser Gruppen 12 eine Anzahl von bidirektionalen Schaltern umfasst, welche gleich der Anzahl von Ausgangs-Phasen 7 ist (im spezifischen Beispiel, wie in Fig. 4 angegeben, bedeutet dies, dass drei bidirektionale Schalter pro Gruppe 12 vorhanden sind), wobei diese bidirektionalen Schalter 4 individuell mit den korrespondierenden Ausgangs-Phasen 7 verbunden sind.

Die erste Stufe 8 wird mit der zweiten Stufe 9 verbunden, indem m umfangsmässig benachbarte Eingangs-Phasen des Stators des Generators auf ihrer Nicht-Generatorseite unter Bildung von einzelnen Leitern 13 zusammengefasst werden. In diesem Aufbau muss die Anzahl der Eingangsphasen 6 dementsprechend ein ganzzahliges Vielfaches der Anzahl der Ausgangs-Phasen 7 sein. Im vorliegenden Fall, in dem es 15 Eingangs-Phasen und 3 Ausgangs-Phasen gibt, führt dies zu fünf Leitern 13, welche dann mit dem Eingang der Gruppen 12 in der zweiten Stufe des Matrix-Konverters verbunden werden können, wie dies oben erläutert ist.

Überraschenderweise führt die vorgeschlagene Architektur gemäss Fig. 4 zu einem Matrix-Konverter mit 15 Phasen und entsprechend niedrigeren Harmonischen bei hohen Ordnungen mit 16% weniger Thyristoren als beim originalen sechs-Phasen-Aufbau, wie in Fig. 1 angegeben.

Ein interessantes Resultat dieses vorgeschlagenen fortgeschrittenen Konzeptes ist, dass, infolge der sehr hohen Anzahl von Phasen, die Möglichkeit besteht, eine eingeschränkte Anzahl, bspw. 10%, von Turned-Off Elementen wie GTO's zu verwenden. Der Vorteil kann darin bestehen, zunächst das Problem der Turn-Off Zeit loszuwerden, und dann gegen die verbleibenden harmonischen Verzerrungen zu wirken.

"Ventile", d.h. bidirektionale Schalter (Thyristoren, IGBT, IGCT, GTO...) sind immer noch zahlreich. Das neue Konzept gibt eine grosse Flexibilität, die individuelle Auslegung der "Ventile" und deren Kosten zu optimieren. Der Punkt ist, dass die "Ventile" permanent in der gepulsten Betriebsweise verwendet werden.

Die gepulste Betriebsweise erlaubt es, vergleichsweise grosse Ströme mit einem niedrigen Arbeits-Zyklus (duty cycle) zu haben, was exakt der geplanten Anwendung entspricht.

Wie bereits oben erwähnt, produziert jedes Verfahren zum Betrieb eines Matrix-Konverters inhärent die Anforderung, eine ausgewählte Eingangs-Phase mit einer ausgewählten Ausgangs-Phase zu verbinden. Die zweite Stufe des vorgeschlagenen Konverters kann mit einer Sequenz der Kommutierung betrieben werden, wie sie für einen Matrix-Konverter mit einer einzigen Stufe definiert und bekannt ist. Möglich ist beispielsweise eine Betriebsweise, wie sie in der DE-A-10051222 beschrieben ist.

Der einzige Punkt besteht darin, zu überprüfen

- ob Kommutierungen innerhalb der Gruppe der ersten Stufe angefordert werden, dann muss keine Kommutierung in der zweiten Stufe ausgelöst werden,

- oder ob Kommutierungen von einer Gruppe auf eine andere angefordert werden, dann sollte die Kommutierungs-Anfrage ausgeführt werden. Die erste Stufe erhält nur Information betreffend die zu verbindenden Generator-Phasen und die Richtung der Leitung.

Konzept-Evaluation für grosse Anlagen:

Hierbei soll aufgezeigt werden, wie bei einem grossen Aufbau die Generator/Konverter Konfiguration und deren Performance sein könnte.

Mit der Vorgabe, Grössenordnungen und Schlüsselfaktoren zu bestimmen, ist es ausreichend, die folgende "Spezifikation" für den Generator in Betracht zu ziehen:

- P = 45 MW, S = 55 MVA

- Un = 11 kV, In = 3 kA

Nachfolgend ist die Begründung für einen Einzelstufen-Konverter gegeben. Einige der Zahlen sind sowohl für einen Einzelstufen- als auch für einen 2-Stufen-Konverter angegeben.

Spannung in Sperrrichtung auf die Schalter

Die ungünstigste Spannung in Sperrrichtung tritt dann auf, wenn ein Schalter kurzgeschlossen wird und alle anderen ausgeschaltet sind. In diesem Fall ist die Maximalspannung über einem Schalter, Vth, gegeben als:

$$Vth = sqrt(2)(Un + 2*Vg) \approx 3.5Un$$

In dieser Gleichung ist Vg die elektromotive Kraft des Generators pro Phase, und Un die Netzspannung.

Für 11 kV benötigt man $N_s$= 8 Thyristoren in Reihe pro Schalter. Für den Zweistufen-Konverter benötigt man 4 Thyristoren auf der Generator-Seite (erste Stufe 8) und 4 auf der Netzwerk-Seite (zweite Stufe 9).

Ermittlung des Leistungs-Verlustes

Der Leistungs-Verlust im Konverter beruht auf 3 Beiträgen:

- Leistungs-Verluste

- Kommutierungs-Verluste

- Snubber-Verluste

Leitung ist ein wesentlicher Teil der gesamten Verlustleistung und kann für eine Schwellenspannung von 1 V, und einen Ersatzwiderstand (Slope Resistance) von 0.16 mΩ grob evaluiert werden.

Generell kann gesagt werden, dass die vorliegende Erfindung vom Vorteil einer hohen Anzahl von Phasen auf der Generator-Seite profitiert, was in der Regel zu niedrigeren Amplituden und höheren Frequenzen von unerwünschten Harmonischen führt. Dies aufgrund der Tatsache, dass der normalerweise auftretende Nachteil des Erfordernisses einer grossen Anzahl von Schalt-Elementen vermieden werden kann.

BEZUGSZEICHEN-LISTE

| 1 | Generator |
|---|---|
| 2 | Sternpunkt, Stemverbindung |
| 3 | Matrix-Konverter, Konverter |
| 4 | bidirektionaler Schalter |
| 5 | Transformator |
| 6 | Mehrphasen-Wechselstrom |
| 7 | Ausgangs-Wechselstrom |
| 8 | Gruppe von geteilten Eingangsschaltern, erste Stufe des Konverters |
| 9 | Gruppe von geteilten Ausgangsschaltern, zweite Stufe des Konverters |
| 10 | Schalt-Element, Thyristor |
| 11 | Zweig des bidirektionalen Schalters |
| 12 | Gruppe von bidirektionalen Schaltern |
| 13 | Leiter |

G1 - G6   Generatorphase
L1 - L3   Phase einer Last (Netz)

m   Anzahl von Phasen des Mehrphasen-Wechselstroms
n   Anzahl von Phasen des Ausgangs-Wechselstroms
k   Anzahl von Schalt-Elementen in Reihe in jedem Zweig eines bidirektionalen Schalt-Elementes

**Patentansprüche**

1.  Matrix-Konverter (3) für die Umwandlung eines Mehrphasen-Wechselstroms (6) in einen gewünschten Ausgangs-Wechselstrom (7), wobei m Phasen des Mehrphasen-Wechselstroms (6) mit m > 2 in Ausgangs-Wechselstrom mit n Phasen (L1,...,L3) einer Last mit n > 1 mittels einer Vielzahl von steuerbaren bidirektionalen Schaltern (4) konvertiert werden, m ein ganzzahliges Vielfaches von n ist, wobei der Konverter (3) wenigstens zwei Stufen (8, 9) umfasst, und in wenigstens einer ersten Stufe (8) des Konverters (3) jede Phase des Mehrphasen-Wechselstroms (6) durch einen steuerbaren bidirektionalen Schalter (4) gesteuert wird, und diese erste Stufe (8) des Konverters direkt mit einem Generator (1) verbunden rst, wobei in wenigstens einer zweiten Stufe (9) des Konverters (3) m/n Gruppen (12) von steuerbaren bidirektionalen Schaltern (4) angeordnet sind, und jede Gruppe (12) n parallele bidirektionale Schalter (4) aufweist, welche individuell mit jeder der n Phasen des Ausgangs-Wechselstroms (7) verbunden sind, wobei, wenn k Schaltelemente in Reihe als Stapel in jedem bidirektionalen Schalter angeordnet sind, um der Spannung widerstehen zu können, diese Reihe in wenigstens zwei Stapel mit k1 und k2 Schaltelementen mit $k_1 + k_2 = k$ aufgeteilt sind, wobei die erste Stufe (8) des Konverters von p Gruppen von q Phasen mit p x q = m gebildet wird und jede der p Gruppen aus einem Stapel von $k_1$ Schaltelementen gebildet wird, welche q Phasen mit einer der Schaltgruppen der zweiten Stufe verbinden, und wobei die zweite Stufe des Konverters aus q Gruppen mit n Schalterstapeln gebildet wird, wobei jeder Stapel $k_2$ Schaltelemente in Reihe aufweist und jeder Stapel eine der p Gruppen der ersten Stufe mit einer der n Phasen der Last verbindet.

2. Matrix-Konverter (3) nach Anspruch 1, wobei die zweite Stufe (9) des Konverters die letzte Stufe des Konverters (3) ist und direkt mit einem Transformator (5) oder einer Last verbunden ist.

3. Matrix-Konverter (3) nach Anspruch 1 oder 2, wobei vom Generator (1) m Phasen den Eingang der ersten Stufe (8) bilden, wobei m/n Phasen den Ausgang der ersten Stufe (8) bilden, worin Gruppen von n, vorzugsweise benachbarten, Ausgangs-Phasen der ersten Stufe (8) verbunden sind, und wobei jeder der so gebildeten m/n Leiter (13) mit jedem der bidirektionalen Schalter (4) einer korrespondierenden Gruppe (12) der zweiten Stufe (9) des Konverters (3) verbunden ist.

4. Matrix Konverter (3) nach einem der vorhergehenden Ansprüche,
wobei jeder bidirektionale Schalter (4) mindestens zwei Zweige (11) mit antiparallelen undirektionalen Schalt-Elementen (10) umfasst,
wobei in jedem Zweig mindestens zwei Schalt-Elemente (10) in Reihe zur Verfügung stehen.

5. Matrix-Konverter (3) nach einem der vorhergehenden Ansprüche,
wobei der Mehrphasen-Wechselstrom (6) für die Produktion von elektrischer Energie aus mechanischer Energie durch einen Generator (1) zur Verfügung gestellt wird, und wobei der Mehrphasen-Wechselstrom (6) mehr als drei Phasen hat.

6. Matrix-Konverter (3) nach Anspruch 5, wobei der Generator (1) einen Rotor und einen Stator umfasst, und wobei die Wicklungen des Stators, welche die Phasen des Mehrphasen-Wechselstroms (6) erzeugen, deltaverbunden sind.

7. Matrix-Konverter (3) nach den Ansprüchen 5 oder 6, wobei die erste Stufe des Konverters in den Stator des Generators (1) integriert ist, und wobei vorzugsweise der Teil des Matrix-Konverters (3), welcher im Stator enthalten ist, in der Strömung des den Generator kühlenden Kühlfluids angeordnet ist.

8. Matrix-Konverter (3) nach einem der vorhergehenden Ansprüche,
wobei der gewünschte Ausgangs-Wechselstrom (7) 3 oder 6 Phasen (n) aufweist, und wobei der Mehrphasen-Wechselstrom (6) mehr als 8 Phasen (m) aufweist, wobei vorzugsweise die Anzahl der Phasen des Mehrphasen-Wechselstroms (6) ein Vielfaches von 3 ist.

9. Matrix-Konverter (3) nach Anspruch 8, wobei der Mehrphasen-Wechselstrom (6) 9, 12, 15, 18, 21 oder 24 Phasen aufweist.

10. Matrix-Konverter (3) nach einem der vorhergehenden Ansprüche,
wobei die bidirektionalen Schalter (4) von einer Kontroll-Einheit gesteuert werden, welche m Eingänge mit n Ausgängen ausgewählt verbindet, wobei erste Mittel zur Bestimmung der Signale der Ströme der Eingänge, und zweite Mittel zur Bestimmung der Spannungen der Eingänge zur Verfügung gestellt werden, und wobei die ersten und zweiten Mittel in aktiver Verbindung zum Kontroll-System stehen.

11. Matrix-Konverter (3) nach Anspruch 10, wobei die bidirektionalen Schalter (4) mit dem Kontroll-System durch eine Signal-Leitung verbunden sind, über welche die Information betreffend den SchaltZustand der Schalter an das Kontroll-System übermittelt wird.

12. Matrix-Konverter (3) nach einem der vorhergehenden Ansprüche,
wobei die bidirektionalen Schalter (4) antiparallelgeschaltete Thyristoren oder entsprechend angeordnete IGBT's, IGCT's, oder GTO's umfassen.

13. Matrix-Konverter (3) nach einem der vorhergehenden Ansprüche, worin die Anzahl der Phasen (m) des Mehrphasen-Wechselstroms (6) der Anzahl der Statorschlitze entspricht.

14. Verfahren zum Betrieb eines Matrix-Konverters nach einem der vorhergehenden Ansprüche, wobei, falls eine Kommutierung angefordert ist innerhalb der Gruppe der ersten Stufe (8), keine Kommutierung im zweiten Abschnitt erzeugt wird, und wenn eine Kommutierung von einer Gruppe zu einer anderen Gruppe angefordert wird, die Kommutierung in der zweiten Stufe (9) ausgeführt wird.

## Claims

1. Matrix converter (3) for converting a polyphase alternating current (6) into a desired output alternating current (7),
m phases of the polyphase alternating current (6) with m > 2 being converted into output alternating current with n phases (L1,...,L3) of a load with n > 1 by means of a plurality of controllable bidirectional switches (4), m being an integral multiple of n, the converter (3) comprising at least two stages (8, 9) and in at least one first stage (8) of the converter (3) each phase of the polyphase alternating current (6) being controlled by a controllable bidirectional switch (4), and this first stage (8) of the converter being connected directly to a generator (1),
m/n groups (12) of controllable bidirectional switches (4) being arranged in at least one second stage (9) of the converter (3), and each group (12) having n parallel bidirectional switches (4), which are individually connected to each of the n phases of the output alternating current (7),
if k switching elements are arranged in series as a stack in each bidirectional switch in order to be able to withstand the voltage, this series being divided into at least two stacks with k1 and k2 switching elements with k1 + k2 = k,
the first stage (8) of the converter being formed by p groups of q phases with p x q = m and each of the p groups of a stack being formed by k1 switching elements, which connect q phases to one of the switching groups of the second stage, and
the second stage of the converter being formed by q groups with n switch stacks, each stack having k2 switching elements in series and each stack connecting one of the p groups of the first stage to one of the n phases of the load.

2. Matrix converter (3) according to Claim 1, the second stage (9) of the converter being the last stage of the converter (3) and being connected directly to a transformer (5) or to a load.

3. Matrix converter (3) according to Claim 1 or 2, m phases of the generator (1) forming the input of the first stage (8), m/n phases forming the output of the first stage (8), wherein groups of n, preferably adjacent, output phases of the first stage (8) are connected, and each of the m/n conductors (13) formed in this way being connected to each of the bidirectional switches (4) of a corresponding group (12) of the second stage (9) of the converter (3).

4. Matrix converter (3) according to one of the preceding claims, each bidirectional switch (4) comprising at least two branches (11) with antiparallel unidirectional switching elements (10), and at least two switching elements (10) being available in series in each branch.

5. Matrix converter (3) according to one of the preceding claims, the polyphase alternating current (6) being provided by a generator (1) for the production of electrical energy from mechanical energy, and the polyphase alternating current (6) having more than three phases.

6. Matrix converter (3) according to Claim 5, the generator (1) comprising a rotor and a stator, and the windings of the stator, which generate the phases of the polyphase alternating current (6), being connected in delta.

7. Matrix converter (3) according to Claims 5 or 6, the first stage of the converter being integrated into the stator of the generator (1), and preferably the part of the matrix converter (3), which is contained in the stator, being arranged in the flow of the cooling fluid, which cools the generator.

8. Matrix converter (3) according to one of the preceding claims, the desired output alternating current (7) having 3 or 6 phases (n), and the polyphase alternating current (6) having more than 8 phases (m), preferably the number of phases of the polyphase alternating current (6) being a multiple of 3.

9. Matrix converter (3) according to Claim 8, the polyphase alternating current (6) having 9, 12, 15, 18, 21 or 24 phases.

10. Matrix converter (3) according to one of the preceding claims, the bidirectional switches (4) being controlled by a control unit, which selectively connects m inputs to n outputs, first means for determining the signals of the currents of the inputs and second means for determining the voltages of the inputs being made available, and the first and second means being actively connected to the control system.

11. Matrix converter (3) according to Claim 10, the bidirectional switches (4) being connected to the control system by a signal conductor, via which the information relating to the switching state of the switches is transmitted to the control system.

12. Matrix converter (3) according to one of the preceding claims, the bidirectional switches (4) comprising thyristors connected in antiparallel or appropriately arranged IGBTs, IGCTs or GTOs.

13. Matrix converter (3) according to one of the preceding claims, wherein the number of phases (m) of the polyphase alternating current (6) corresponds to the number of stator slots.

**14.** Method for operating a matrix converter according to one of the preceding claims, wherein, if a commutation is required within the group of the first stage (8), no commutation is generated in the second section, and when a commutation from one group to another group is required, the commutation is carried out in the second stage (9).

**Revendications**

**1.** Convertisseur matriciel (3) qui convertit un courant alternatif polyphasé (6) en un courant alternatif de sortie (7) souhaité,

dans lequel m phases du courant alternatif polyphasé (6), avec m > 2, sont converties en un courant alternatif de sortie à n phases (L1, ..., L3) d'une charge, avec n > 1, au moyen de plusieurs commutateurs bidirectionnels asservis (4), m étant un multiple entier de n,

le convertisseur (3) comprenant au moins deux étages (8, 9), chaque phase du courant alternatif polyphasé (6) étant commandée dans au moins un premier étage (8) du convertisseur (3) par un commutateur bidirectionnel asservi (4), ce premier étage (8) du convertisseur étant relié directement à un générateur (1),

m/n groupes (12) de commutateurs bidirectionnels asservis (4) étant disposés dans au moins un deuxième étage (9) du convertisseur (3), chaque groupe (12) présentant n commutateurs bidirectionnels parallèles (4) reliés individuellement à chacune des n phases du courant alternatif de sortie (7),

dans lequel si k éléments de commutation sont disposés en piles série dans chaque commutateur bidirectionnel pour pouvoir résister à la tension, cette série est divisée en au moins deux piles de k1 et k2 éléments de commutation, avec $k_1 + k_2 = k$,

le premier étage (8) du convertisseur étant formé de p groupes de q phases, avec $p \times q = m$, chacun des p groupes étant formé d'une pile de $k_1$ éléments de commutation qui relient q phases à l'un des groupes de commutation du deuxième étage et

le deuxième étage du convertisseur étant formé de q groupes de n piles de commutateurs, chaque pile présentant $k_2$ éléments de commutation en série et chaque pile reliant l'un des p groupes du premier étage à l'une des n phases de la charge.

**2.** Convertisseur matriciel (3) selon la revendication 1, dans lequel le deuxième étage (9) du convertisseur est le dernier étage du convertisseur (3) et est relié directement à un transformateur (5) ou à une charge.

**3.** Convertisseur matriciel (3) selon les revendications 1 ou 2, dans lequel m phases du générateur (1) forment l'entrée du premier étage (8), m/n phases formant la sortie du premier étage (8) dans lequel sont reliés des groupes de n phases de sortie du premier étage (8), de préférence voisines, chacun des m/n conducteurs (13) ainsi formés étant relié à chacun des commutateurs bidirectionnels (4) d'un groupe correspondant (12) du deuxième étage (9) du convertisseur (3).

**4.** Convertisseur matriciel (3) selon l'une des revendications précédentes, dans lequel chaque commutateur bidirectionnel (4) comprend au moins deux branches (11) qui présentent des éléments de commutation unidirectionnels antiparallèles (10), au moins deux éléments de commutation (10) étant disposés en série dans chaque branche.

**5.** Convertisseur matriciel (3) selon l'une des revendications précédentes, dans lequel le courant alternatif polyphasé (6) est délivré pour la production d'énergie électrique à partir d'énergie mécanique dans un générateur (1), le courant alternatif polyphasé (6) présentant plus de trois phases.

**6.** Convertisseur matriciel (3) selon la revendication 5, dans lequel le générateur (1) comprend un rotor et un stator, les enroulements de stator qui produisent les phases du courant alternatif polyphasé (6) étant raccordées en triangle.

**7.** Convertisseur matriciel (3) selon les revendications 5 ou 6, dans lequel le premier étage du convertisseur est intégré dans le stator du générateur (1) et de préférence au moins la partie du convertisseur matriciel (3) contenue dans le stator est disposée dans l'écoulement du fluide de refroidissement qui refroidit le générateur.

**8.** Convertisseur matriciel (3) selon l'une des revendications précédentes, dans lequel le courant alternatif de sortie (7) souhaité présente 3 ou 6 phases (n), le courant alternatif polyphasé (6) présentant plus de 8 phases (m), le nombre des phases du courant alternatif polyphasé (6) étant de préférence un multiple de 3.

**9.** Convertisseur matriciel (3) selon la revendication 8, dans lequel le courant alternatif polyphasé (6) présente 9, 12, 15, 18, 21 ou 24 phases.

**10.** Convertisseur matriciel (3) selon l'une des revendications précédentes, dans lequel les commutateurs bidirectionnels (4) sont commandés par une unité de contrôle qui relie de manière sélective m entrées à n sorties, des premiers moyens de détermination des signaux des courants des entrées et des deuxièmes moyens de détermination des tensions des entrées étant prévus, les premiers et les deuxièmes moyens communiquant activement avec le système de contrôle.

**11.** Convertisseur matriciel (3) selon la revendication 10, dans lequel les commutateurs bidirectionnels (4) sont reliés au système de contrôle par un conducteur de signalisation par lequel les informations concernant l'état de commutation des commutateurs sont transmises au système de contrôle.

**12.** Convertisseur matriciel (3) selon l'une des revendications précédentes, dans lequel les commutateurs bidirectionnels (4) comprennent des thyristors raccordés de manière antiparallèle ou des IGBT, IGCT ou GTO disposés de manière appropriée.

**13.** Convertisseur matriciel (3) selon l'une des revendications précédentes, dans lequel le nombre des phases (m) du courant alternatif polyphasé (6) correspond au nombre des fentes du stator.

**14.** Procédé de conduite d'un convertisseur matriciel selon l'une des revendications précédentes, dans lequel si une commutation est demandée à l'intérieur du groupe du premier étage (8), aucune commutation n'est exécutée dans la deuxième partie et si une commutation d'un groupe à un autre groupe est demandée, la commutation est réalisée dans le deuxième étage (9).

Fig.1

Fig.2a

Fig.2b

Fig. 3

*Fig. 4*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5594636 A
- DE 10051222 A
- EP 1199794 A

**In der Beschreibung aufgeführte Nicht-Patentliteratur**

- **von J.W. Kolar.** Novel 3-Phase AC-DC-AC Sparse Matrix Converter. *IEEE,* 2002
- **von Lixiang Wei.** Matrix Converter Topologies with reduced number of switches. *IEEE,* 2002